Europäisches Patentamt

European Patent Office

Office européen des brevets

(11) Publication number: **0 335 990 B1**

# EUROPEAN PATENT SPECIFICATION

(45) Date of publication of patent specification: **08.12.93**   (51) Int. Cl.5: **G06F 9/38**, G06F 15/16

(21) Application number: **88105366.4**

(22) Date of filing: **02.04.88**

(54) Processor-processor synchronization.

(43) Date of publication of application:
**11.10.89 Bulletin 89/41**

(45) Publication of the grant of the patent:
**08.12.93 Bulletin 93/49**

(84) Designated Contracting States:
**BE CH DE FR GB IT LI NL SE**

(56) References cited:
**EP-A- 0 147 599**
**US-A- 4 547 849**

**IBM TECHNICAL DISCLOSURE BULLETIN, vol. 26, no. 9, February 1984, page 4698, New York, US; W.H. ALLEN et al.: "Saving data processor execution time through the use of equates for a plurality of condition statements"**

**ELECTRICAL DESIGN NEWS, vol. 31, no. 2, 23rd January 1986, pages 175-192, Boston, Massachusetts, US; S. HARRIS et al.: "Software links math chip to 68000-family muPs"**

**IEEE MICRO, vol. 6, no. 2, April 1986, pages 29-46, IEEE, New York, US; M.L. FUCCIO et al.: "Hardware architecture considerations in**

the WE32100 chip set"

(73) Proprietor: **International Business Machines Corporation**
**Old Orchard Road**
**Armonk, N.Y. 10504(US)**

(72) Inventor: **Bock, Dietrich, Dipl.-Ing.**
**Herdlauchring 5/1**
**D-7036 Schönaich(DE)**
Inventor: **Schulze-Schölling, Hermann, Dipl.-Ing.**
**Rohrweg 6c**
**D-7034 Gärtringen(DE)**
Inventor: **Kumpf, Wolfgang**
**Bühlenstrasse 4B**
**D-7038 Holzgerlingen(DE)**
Inventor: **Rudolph, Peter**
**Dresdner Strasse 13**
**D-7036 Schönaich(DE)**

(74) Representative: **Jost, Ottokarl, Dipl.-Ing.**
**IBM Deutschland Informationssysteme GmbH,**
**Patentwesen und Urheberrecht**
**D-70548 Stuttgart (DE)**

**Description**

The invention relates to a method of and an arrangement for synchronizing two asynchronously operating processing units said synchronization being performed by means of a branch instruction which is handled by one of the processors.

In operating computer systems having a co-processor, the (main-) processor normally enters a waiting state immediately after the sequence of commands, instructions and data was transferred to the co-processor until the result is produced by the co-processor. Instead, the processor should advantageously execute a sequence of instructions of his own which of course are independent of the co-processor result. This means that the time at which the operations of both processors should become synchronized can be selected at random in the program of the processing unit.

Hitherto known methods and arrangements do not seem to be very effective with respect to the handling of branch instructions for synchronizing processor to processor communications as loops have to be completely processed to their end, even when the co-processor has finished its operation. This results in a loss of time. An example of such a known processor-co-processor operation is described in "Electrical Design News", vol. 31, no. 2, 23rd January 1986, pages 175-192, Boston, Massachusetts, US; S. Harris et al.: "Software links math chip to 68000-family μPs", wherein the issuing computer tests the busy/ready flag bit CA of the other processor in a null-come-again loop. After it completes a task, the other processor resets the CA bit, letting the computer go to the next program step. In addition to the CA bit, the response register contains information that alerts the computer to error conditions in the other processor.

Therefore, it is an object of the invention as claimed to present a solution for a more effective handling of a special branch instruction for synchronizing two asynchronously operating processing units with slight hardware modifications of the standard control arrangement of one of the processors.

Accordingly, a method of and an arrangement for synchronizing a processor to processor operation is disclosed where a conditional branch instruction to the non-busy status of the other processor is made which forces the issuing processor to wait for the occurrence of a special status of the other processor (e.g. the result of a floating point operation when the other processor is used as a floating point co-processor) when there are no further instructions which can be performed by the issuing processor independently. A further test has to be made to detect whether an exceptional status has occurred (e.g. overflow) or not. In the last named case the one processor can continue its sequential program flow which it must leave in the first case.

According to the invention as claimed the above said two tests are combined by a single instruction (branch on pattern) which executes both tests during a time period not longer than the time period required for executing a single test. In addition to that the tests for both conditions require only one instruction bit pattern from the totality of the instruction bit patterns provided for conditional branches.

The above described features result in the advantage of an effective handling of conditional branches for synchronizing processor to processor communications with only slight modifications of the standard control hardware of a processor.

A complete understanding of the present invention may be obtained by reference to the accompanying drawings in which:

Fig. 1   is a schematic block diagram showing the general structure of a two processor arrangement;

Fig. 2   is a schematic block diagram showing the circuitry necessary for a branch on pattern instruction for a processor to processor synchronization;

Fig. 3   is a schematic block diagram showing the flow of instructions and control signals in the processor arrangement;

Figs. 4 and 5   are schematic block diagrams showing various control signals with respect to time.

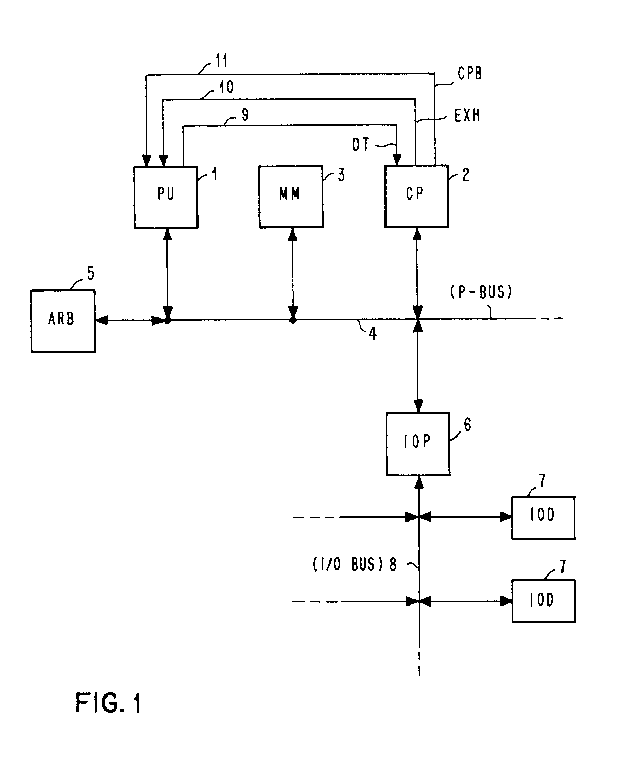

Referring now to Fig. 1, there is shown a block diagram of a conventional data processing system having various complex components which are interconnected by busses. A processor bus (P-bus) 4 connects the central control component, the processing unit (PU) 1 to a main memory (MM) 3, to a co-processor (CP) 2 and to an input/output processor (IOP) 6 or vice versa.

Most of the computer systems are provided with an arbitration unit (ARB) 5 which grants bus access to the units on the base of their priority classes.

The I/O devices 7 communicate via an I/O bus (I/O-bus) 8 with the input/output processor 6 which is connected to the processor bus 4.

In systems similar to the one shown in Fig. 1 one or more co-processors might be used, depending on the degree of universality of the tasks to be executed by a particular computer system. Co-processors are widely known as having special abilities which support various additional functions, e.g. in the arithmetic, graphics, etc. domain.

By way of example it is assumed that the co-processor 2 of Fig. 1 supports floating point operations on a high level of accuracy. Normally, the processing unit-co-processor communication is initiated by one or more PU commands sent over the processor bus 4. The co-processor receives data which are required for performing the various operations via the processor bus 4, either directly from the PU (immediate operands) or from the main memory 3. The reading of data from memory is initiated by the PU (Fetch instruction F). When the memory data are available on the processor bus a signal on the DT line 9 is activated which in turn causes the data to be stored in the internal registers of the co-processor. Result data are sent either to the PU or to the main memory. In operating computer systems having a co-processor, the (main-) processor normally enters a waiting state immediately after the sequence of commands, instructions and data was transferred to the co-processor until the result is produced by the co- processor. Instead of waiting, the processor should advantageously execute a sequence of instructions of his own which of course are independent of the co-processor results. This means that the time at which the operations of both processors have to become synchronized can be selected at random in the program of the PU. The best way to do this is a conditional branch instruction to the co- processor busy status which forces the PU to wait for the co-processor result (by a conditional branch instruction loop).

After completion of the co-processor busy status a further conditional branch instruction is necessary to test the result as whether it is within a defined and permissible numerical range or not (e.g. overflow). In the first case the program sequence of the PU can be continued but in the second case it must leave the linear flow of instructions and branch to a subroutine for generating a message to the operating system of the computer system.

The aim of the invention as claimed is to combine the above said two tests by a single instruction (BPT = BRANCH ON PATTERN) which execute both tests during a time period not longer than the time period required for executing a single test. In addition to that the tests for both conditions require only one instruction bit pattern (code point) from the totality of the instruction bit patterns provided for conditional branches.

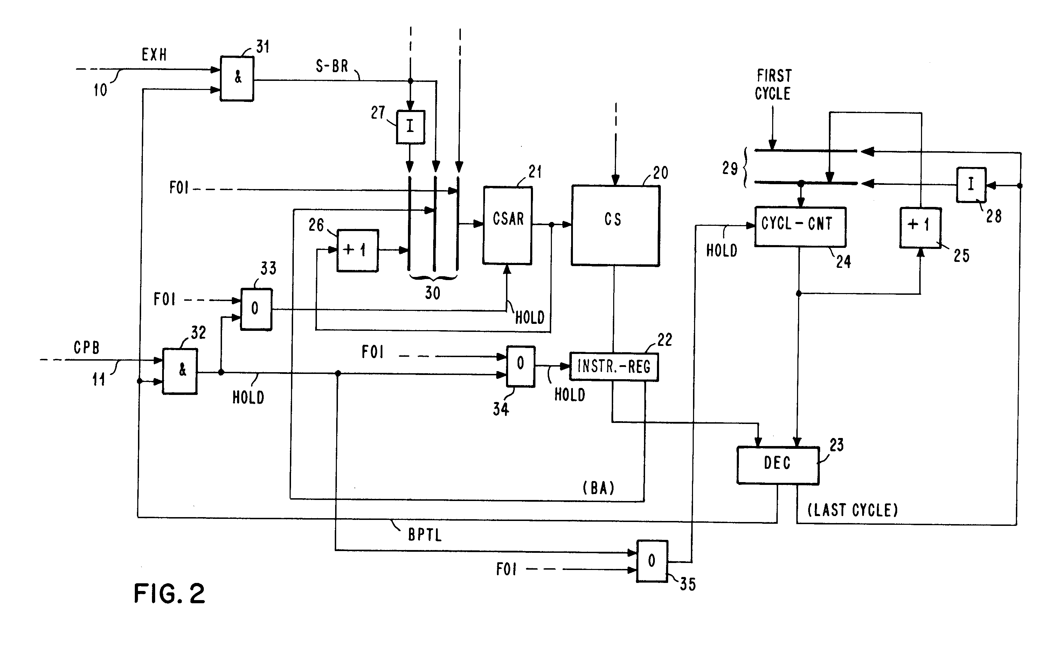

The implementation of the invention requires a hardware modification of the standard control arrangement, i.e. for the control store address register 21 (Fig. 2), the instruction register 22 and the cycle counter 24 which is required for processors in which at least one type of instruction is used, the execution of which can not be completed within one cycle.

The hardware modification comprises only a few additional control gates: AND gate 32 and OR gates 33, 34 and 35. The implementation of the invention requires low additional expenditures for processors in which hold conditions are implemented for the above named components, e.g. because there is a wait cycle necessary for a storage access.

In most cases exceptional situations are handled by micro code rather than by hardware. Situation or event dependent signals are generated which represent in a unique way the respective exceptional situation. These exceptional situations activate hardware controls by which the address of the next instruction is called for from a different source (register, hardware forced indirect branch). The new address points to the begin (the first address) of a sub-routine which is used for handling the exception.

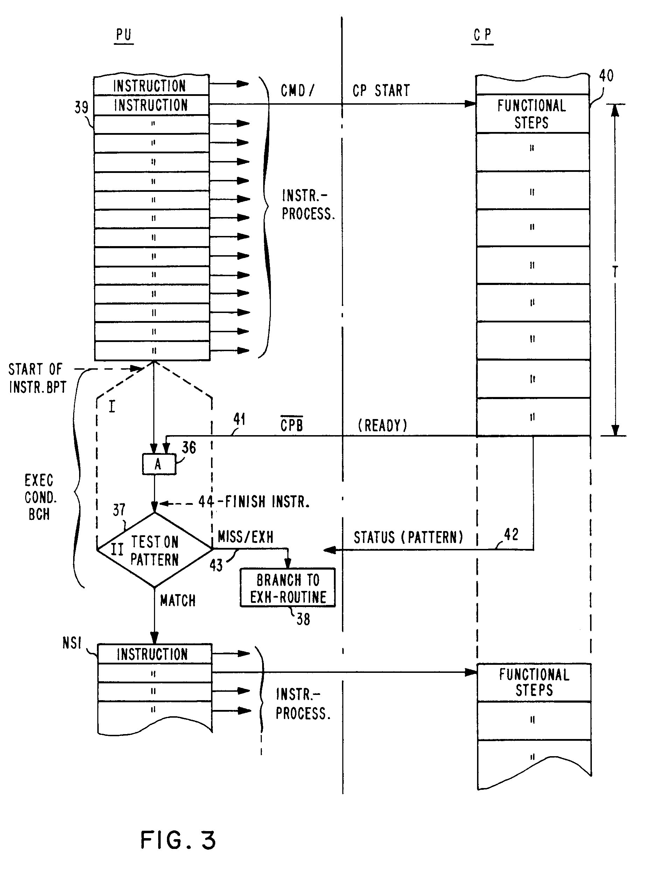

Fig. 3 shows in principal a method of operation by which for each PU-CP synchronization two conditional branches are linked to form a single instruction with respect to storage space and execution time. The scheme in Fig. 3 shows on the left hand side a poole or stock 39 of instructions which are processed serially. The second instruction from the top is a command which starts the co-processor CP, e.g. for processing a floating point operation. Both processors handle their instructions and functional steps in parallel but asynchronously.

During the time period T in which the co-processor is calculating the result of the floating point operation, the processing unit PU processes a plurality of instructions of its own (e.g. those which are independent from the co-processor) until it needs the result of the floating point operation for further processing. The PU has to wait until the result is available from the co-processor or it may directly proceed if the co-processor was fast enough.

When the floating point operation is completed the co-processor transfers a ready signal $\overline{CPB}$ to the processing unit which is shown in Fig. 3 schematically by an AND-function 36. This And-function blocks the final execution of the test instruction if the ready signal is not active. In the next step 37, reached when the co-processor was signalled 'ready', a test on the co-processor status is performed whereby the status pattern is available on line 42 to the processing unit. When the patterns match the next sequential instruction can be performed by the PU. If the test results in a mismatch a branch 38 has to be taken to a routine handling the exceptional situation of the co-processor operation which is identified by its status.

3

## TABLE 1

### μ-INSTRUCTION SEQUENCE

| Addr | Cycle | Op-Code | Rem. | Cond./Bit Patt. |
|------|-------|---------|------|-----------------|
| • | • | • | | |
| • | • | • | | |
| • | • | • | | |
| XX000 | T0 | TCTRL | | |
| XX000 | T1 | " | | |
| XX001 | T0 | F | | |
| XX001 | T1 | " | | |
| XX010 | T0 | ADD | | |
| XX011 | T0 | ADD | | |
| XX100 | T0 | MVI | | |
| XX101 | T0 | BPT | | PAT |
| XX101 | T1 | " | (wait cycle) | * |
| XX101 | T1 | " | (no branch) | |
| XX111 | T0 | MV | | |
| • | • | • | | |
| • | • | • | | |
| • | • | • | | |
| XXX11 | T0 | SNS | | Status |

In the above table 1 an example is given of a micro instruction sequence (execution phases only) for the execution of one or more particular machine instructions. Table 1 shows for each micro instruction the instruction address, the cycles required, the operation code (OP-code) and, where necessary special conditions or bit patterns. The table, however, shows only a section of a micro instruction sequence. The TCTRL micro instruction sends a command, e.g. out of a work register, to the co-processor CP. The next micro instruction F reads the necessary data, out of memory or from a work register in the PU, onto the P-Bus, and the CP receives these data from the P-Bus when the signal on DT goes active and starts the operation.

The next two ADD micro instructions are used to increment the addresses of a first and second operand. As table 1 shows, further micro instructions are serially executed in the PU, while the CP is executing its set up operation. If there are no further PU micro instructions in the sequence which can be executed without having the CP result available, the next micro instruction in the sequence must be a branch on pattern (BPT) micro instruction which is designed to perform the previously mentioned, combined test on whether the CP is still busy or not and as next whether an exception handling routine is necessary which depends on a match or mismatch of the patterns to be tested.

The example of table 1 shows that the co-processor is still busy for 2 cycles (T0, first T1) after execution begin of the BPT micro instruction which means in connection with Fig. 3, that the AND-condition 36 is not met. So, the next test on pattern 37 is delayed for one T1 cycle until the busy signal CPB dropps. In the example of table 1, MV is assumed to be the next sequential micro instruction (NSI) after the BPT instruction (No branch).

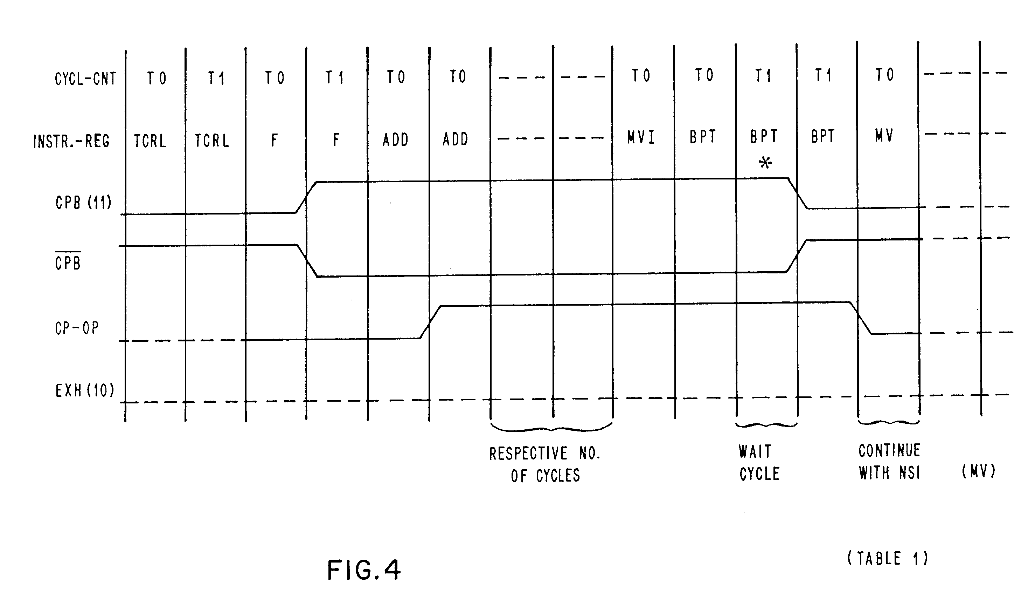

For the micro instruction sequence shown in table 1 Fig. 4 represents the curves of the various control signals with respect to time which control the arrangement of Fig. 2. In the first line the cycles Ti of the cycle counter 24 (CYCL-CNT) are shown. The next line below shows the micro instructions by its op code and for how many cycle times they are present in the instruction register (INSTR-REG) 22. It can be seen, that the various micro instruction need a different number of cycle times for their execution. The ADD, MV, MVI micro instructions need only one cycle time. The TCTRL and F micro instruction require two cycle times and the BPT needs in the non-wait and non-branch situation two cycle times whereas in the non-wait but branch situation three cycles are necessary.

The co-processor receives its starting command during the first cycle time but it can not become busy because the necessary data on which the operations should be performed are not yet present. These data will be received at the end of the third cycle time at the earliest so that the co-processor busy signal CPB rises at the end of the third cycle determined by the cycle counter. At the same time the inverse signal $\overline{CPB}$ which was active from the beginning becomes inactive. The next line below shows the period CP-OP during which the co-processor is operational. This signal starts with the end of the first ADD micro instruction and it is completed at the end of the third BPT micro instruction cycle.

As table 1 and Fig. 4 show an exceptional situation has not occured which means that no exception handling routine has to be performed. Therefore, the PU can proceed with the next sequential instruction. The EXH signal on the bottom line on Fig. 4 remains in its down-level. As already mentioned the signals represented in Fig. 4 control the arrangement of Fig. 2. The micro instructions are read from control store 20 into the instruction register 22. The instructions are decoded in a decoder 23 and executed in the processor under clock and cycle control.

When a branch on pattern micro instruction BPT is decoded by decoder 23 a signal is sent over line BPTL to AND-gate 32 which generates a hold signal when the CPB signal is present at its input 11 which means that the co-processor is still busy and the PU has to wait until the co-processor operation is completed. The hold signal blocks loading of the instruction register 22 with a new micro instruction via OR-gate 34. At the same time the control store address register 21 is blocked by the hold signal from AND-gate 32 via OR-gate 33.

The above described blocking situation will continue until the co-processor result is available which means that the CPB signal will be removed from input 11 of AND-gate 32 so that the hold condition is not longer present at the instruction register 22, the cycle counter 24 and the control store address register 21. Now, the instruction register 22 can be loaded with the next sequential micro instruction NSI and the sequence or flow of micro instructions from the stock 39 of instructions will be continued.

## TABLE 2

### µ-INSTRUCTION SEQUENCE

| Addr | Cycle | OP-Code | Rem. Cond/Bit Patt. |
|------|-------|---------|---------------------|
| . | | . | |
| . | | . | |
| . | | . | |
| X0000 | T0 | TCTRL | |
| X0000 | T1 | " | |
| X0001 | T0 | F | |
| X0001 | T1 | " | |
| X0010 | T0 | ADD | |
| X0011 | T0 | ADD | |
| . | . | . | |
| . | . | . | |
| X0110 | T0 | MVI | |
| X0111 | T0 | BPT | |
| X0111 | T1 | " | wait cycle          * |
| X0111 | T1 | " | wait cycle          * |
| X0111 | T1 | " | |
| X0111 | T2 | " | Branch to BA (X1100) |
| X1000 | T0 | MV | |
| . | . | . | |
| . | . | . | |
| . | . | . | |
| X1100 | T0 | SNS | EXH Routine |
| X1101 | T0 | MV | |
| X1110 | T0 | A | |
| X1111 | T0 | MV | RETURN |

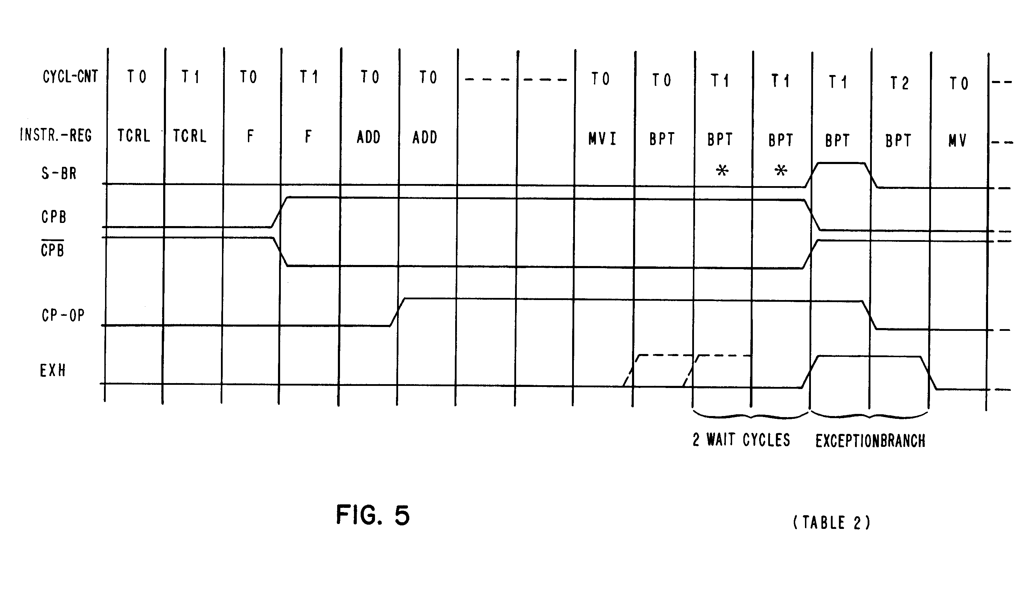

The next example which is shown in the above table 2 differs slightly from the example in table 1. When the branch on pattern (BPT) micro instruction was read with an address X0111 from control store 20 into the instruction register 22 the co-processor was still busy as also can be seen in Fig. 5 where the respective signal CPB is its up level. Therefore, the address mechanism 21, 26, 27 and 30 of the control store 20 is still blocked and the PU idles on this instruction address until the co-processor result is available. From this moment the blocking condition of the cycle counter 24 is suspended in this example. The PU had to wait for two wait cycles before it could initiate status testing and the branch to an exception handling routine. The test on pattern 37 (Fig. 3) discovers the pattern which is part of the status indication of the last functional step of a sequence of functional steps which the co-processor had to perform for handling the co-processor operation (e.g. a floating point operation) which was started by a command from the PU. The branch address BA which is part of the micro instruction in the instruction register 22 and which is decoded by operation decoder 23 is sent via transmission gate 30 to the control store address register 21. With a signal EXH on line 10 and a signal on the BPTL line in the up-level AND-gate 31 generates the control signal S-BR which controls transmission gate 30.

With reference to the example in table 2 the branch address is X1100 which is the address of the first instruction SNS of the exception handling routine. The last micro instruction of this routine contains the return address which is X1111, the address of the next sequential micro instruction MV. As all the blocking conditions in this part of the processing unit PU are suspended, the PU continues with the micro instruction sequence which is contained in its poole 39. The OR-gates 33, 34 and 35 have a second input which is controlled from other instructions FOI when different blocking actions have to be set-up.

## Claims

1. Method of synchronizing two asynchronously operating processing units (1,2), said synchronization being performed by one of the processors (1 or 2) by means of a branch instruction and tests for a busy and exceptional state of the other processor (2 or 1),
   characterized in that
   when synchronism is required said one processor (1 or 2) issues a single branch on pattern (BPT) instruction by which in combination a conditional branch is made to perform a first test on a specific condition (e.g. result available) of the other processor (2 or 1), which causes said one processor to wait until said condition is met,
   after said condition is met a second test is made on an exceptional status (e.g. overflow) which might be caused in said other processor during its operation, and
   if the second test results in a non-exceptional status, said one processor proceed with its next sequential instructions (NSI), but when an exceptional status is detected, said one processor branches to a sub-routine which is provided for handling said exceptional status.

2. Method of claim 1, characterized in that for performing a branch on pattern (BPT) instruction the present address in said one processor's (1 or 2) addressing means (21,26,30), the present instruction in its instruction register (22) and the present instruction cycle in its instruction cycle means (24,25,29) are blocked until the other processor (2 or 1) has arrived at said specific condition (e.g. result available),
   if an exceptional status is not detected the said blocked components are de-blocked so that the next sequential instruction (NSI) can be processed,
   but when an exceptional status is detected the said blocked components are de-blocked and a branch address (BA) which is the address of the first instruction of the exception handling sub-routine is sent to the said addressing means so that the first instruction of the said sub-routine can be performed.

3. Method of claim 1 and/or 2,
   characterized in that
   said branch on pattern instruction (BPT) carries in its instruction format the patterns which are tested on.

4. Arrangement for carrying out the method of claims 1, 2 and/or 3,
   characterized in that in the one processor (1 or 2) additional OR-gates (33,34,35) are provided which are used to increase the number of the hold inputs of the addressing means (21,26,30), the instruction register (22) and the instruction cycle means (24,25,29), said hold inputs being known per se, to allow the passage of hold signals (HOLD) generated by an additional AND-gate (32) when the operation decoder (23) has identified a branch on pattern (BPT) instruction (signal on line BPTL) in said instruction register and at the same time the other processor (2 or 1) is busy (signal CPB on line 11), whereby the address in the said address means, the instruction in the said instruction - register and the instruction cycle in the said instruction cycle means are held and
   a further AND-gate (31) is provided in the one processor (1 or 2) which generates a control signal (S-BR) for the said addressing means when a signal (EXH) indicating an exceptional status of the other processor and simultaneously a signal indicating a branch on pattern instruction in the said instruction register are present so that a branch address (BA) can be sent from the said operation decoder to said addressing means via said AND-gate and a control gate (30), being part of said addressing means.

**Patentansprüche**

1. Verfahren zum Synchronisieren zweier asynchron arbeitender Verarbeitungseinheiten (1, 2) wobei die Synchronisation durch einen der Prozessoren (1 oder 2) mittels eines Verzweigungsbefehls und eines Tests für einen Beschäftigt- und Ausnahme-Zustand des anderen Prozessors (2 oder 1) ausgeführt wird,
dadurch gekennzeichnet daß
wenn Synchronität gefordert ist, der eine Prozessor (1 oder 2) einen einzelnen Verzweige-aufgrund-Muster (BPT)-Befehl ausgibt, durch den in Kombination eine bedingte Verzweigung vorgenommen wird, um einen ersten Test auf eine spezielle Bedingung (z. B. Ergebnis verfügbar) des anderen Prozessors (2 oder 1) auszuführen, was bewirkt, daß der eine Prozessor wartet, bis die Bedingung erfüllt ist, nachdem die Bedingung erfüllt ist, ein zweiter Test hinsichtlich eines Ausnahmezustands (z. B. Überlauf) ausgeführt wird, der in dem anderen Prozessor während seines Betriebs verursacht worden sein könnte, und,
wenn der zweite Test einen Nicht-Ausnahmezustand ergibt, der eine Prozessor mit seinen nächsten sequentiellen Befehlen (NSI) fortfährt, aber wenn ein Ausnahmezustand festgestellt wird, der eine Prozessor in eine Subroutine verzweigt, die zur Handhabung des Ausnahmezustands vorgesehen ist.

2. Verfahren gemäß Anspruch 1, dadurch gekennzeichnet, daß zum Ausführen eines Verzweige-aufgrund-Muster(BPT)-Befehls die vorliegende Adresse in den Adressierungsmitteln (21, 26, 30) des einen Prozessors (1 oder 2), der vorliegende Befehl in seinem Befehlsregister (22) und der vorliegende Befehlszyklus in seinen Befehlszyklusmitteln (24, 25, 29) blockiert werden, bis der andere Prozessor (2 oder 1) bei der speziellen Bedingung (z. B. Ergebnis verfügbar) angekommen ist,
wenn ein Ausnahmezustand nicht festgestellt wird, die blockierten Komponenten entriegelt werden, so daß der nächste sequentielle Befehl (NSI) abgearbeitet werden kann,
aber wenn ein Ausnahmezustand festgestellt wird, die blockierten Komponenten entriegelt werden und eine Verzweigungsadresse (BA), die die Adresse des ersten Befehls der Ausnahmehandhabungs-Subroutine ist, an die Adressierungsmittel gesendet wird, so daß der erste Befehl der Subroutine ausgeführt werden kann.

3. Verfahren gemäß Anspruch 1 und/oder 2, dadurch gekennzeichnet, daß der Verzweige-aufgrund-Muster-Befehl (BPT) in seinem Befehlsformat die Muster trägt, auf die getestet wird.

4. Anordnung zum Ausführen des Verfahrens gemäß der Ansprüche 1, 2 und/oder 3, dadurch gekennzeichnet, daß in dem einen Prozessor (1 oder 2) zusätzliche ODER-Gatter (33, 34, 35) vorgesehen sind, die verwendet werden, um die Anzahl der Halteeingänge der Adressierungsmittel (21, 26, 30) des Befehlsregisters (22) und der Befehlszyklusmittel (24, 25, 29), die an sich bekannt sind, zu erhöhen, um das Passieren von Haltesignalen (HALTEN) zu erlauben, die durch ein zusätzliches UND-Gatter (32) erzeugt werden, wenn der Operationsdecoder (23) einen Verzweige-aufgrund-Muster (BPT)-Befehl (Signal auf Leitung BPTL) im Befehlsregister identifiziert hat und zur gleichen Zeit der andere Prozessor (2 oder 1) beschäftigt ist (Signal CPB auf Leitung 11), wodurch die Adresse in den Adreßmitteln, der Befehl im Befehlsregister und der Befehlszyklus in den Befehlszyklusmitteln gehalten werden, und
ein weiteres UND-Gatter (31) in dem einen Prozessor (1 oder 2) vorgesehen ist, das ein Steuersingal (S-BR) für die Adressierungsmittel erzeugt, wenn ein Signal (EXH), das einen Ausnahmezustand des anderen Prozessors anzeigt, und gleichzeitig ein einen Verzweige-aufgrund-Muster-Befehl anzeigendes Signal im Befehlsregister vorhanden sind, so daß eine Verzweigungsdresse (BA) vom Operationsdecoder an die Adressierungsmittel über das UND-Gatter und ein Steuergatter (30), das Teil der Adressierungsmittel ist, gesendet werden kann.

**Revendications**

1. Procédé de synchronisation de deux processeurs (1, 2), travaillant de façon asynchrone, ladite synchronisation étant effectuée par l'un des processeurs (1 ou 2) par l'intermédiaire d'une instruction de branchement et de tests d'un état occupé et exceptionnel de l'autre processeur (2 ou 1), caractérisé en ce que
lorsque le synchronisme est requis, ledit premier processeur (1 ou 2) émet une instruction de branchement sur séquence (BPT) par l'intermédiaire de laquelle un branchement conditionnel est effectué en combinaison afin d'effectuer un premier test d'une condition spécifique (c'est-à-dire résultat disponible) de l'autre processeur (2 ou 1), ce qui a pour effet de mettre ledit premier processeur en attente jusqu'à ce que cette condition soit réalisée,

lorsque ladite condition est réalisée un second test est effectué sur un état exceptionnel (par exemple dépassement) qui pourrait être causé par l'autre processeur pendant son fonctionnement, et

si le second test indique un état non exceptionnel, ledit premier processeur continue avec ses prochaines instructions séquentielles (NSI), mais lorsqu'un état exceptionnel est détecté, ledit premier processeur effectue un branchement sur un sous-programme qui est fourni pour prendre en charge ledit état exceptionnel.

2. Procédé selon la revendication 1, caractérisé en ce que pour exécuter une instruction de branchement sur séquence (BPT), l'adresse courante dans les moyens d'adressage (21, 26, 30) dudit premier processeur (1 ou 2), l'instruction courante dans son registre d'instruction (22) et le cycle d'instruction courant dans ses moyens de cycle d'instruction (24, 25, 29) sont bloqués jusqu'à ce que l'autre processeur (2 ou 1) soit arrivé à ladite condition spécifique (par exemple "résultat disponible"), si un état exceptionnel n'est pas détecté lesdits composants bloqués sont débloqués de sorte que la prochaine instruction séquentielle (NSI) peut être exécutée, mais lorsqu'un état exceptionnel est détecté lesdits composants bloqués sont débloqués et une adresse de branchement (BA) qui est l'adresse de la première instruction du sous-programme de traitement d'exception, est envoyée auxdits moyens d'adressage de sorte que la première instruction dudit sous-programme peut être exécutée.

3. Procédé selon la revendication 1 et/ou la revendication 2, caractérisé en ce que ledit branchement sur l'instruction de branchement sur séquence (BPT) porte dans son format d'instruction les séquences servant au test.

4. Dispositif pour la mise en oeuvre du procédé selon les revendications 1, 2 et/ou 3, caractérisé en ce que ledit premier processeur (1 ou 2) comporte des portes OU (33, 34, 35) additionnelles qui sont utilisées pour augmenter le nombre des entrées de blocage des moyens d'adressage (21, 26, 30), du registre d'instruction (22) et des moyens de cycle d'instruction (24, 25, 29), lesdites entrées de blocage étant connues en soi, pour permettre le passage des signaux de blocage (HOLD) générés par une porte ET (32) additionnelle lorsque le décodeur d'instruction (23) a identifié une instruction de branchement sur séquence (BPT) (signal sur la ligne BPTL) dans ledit registre d'instruction et que simultanément l'autre processeur (2 ou 1) est occupé (signal CPB sur la ligne 11), de sorte que l'adresse dans lesdits moyens d'adressage, l'instruction dans ledit registre d'instruction et le cycle d'instruction dans lesdits moyens de cycle d'instruction sont bloqués et une porte ET (31) additionnelle est fournie dans ledit premier processeur (1 ou 2), laquelle génère un signal de contrôle (S-BR) pour lesdits moyens d'adressage lorsqu'un signal (EXH) indiquant un état exceptionnel de l'autre processeur et, simultanément, un signal indiquant une instruction de branchement sur séquence dans le registre d'instruction sont présents, de sorte qu'une adresse de branchement (BA) peut être envoyée dudit décodeur d'instruction auxdits moyens d'adressage par l'intermédiaire de ladite porte ET et d'une porte de contrôle (30), faisant partie desdits moyens d'adressage.

FIG. 1

FIG. 2

EP 0 335 990 B1

FIG. 3

| CYCL-CNT | T0 | T1 | T0 | T1 | T0 | T0 | — — | — — | T0 | T0 | T1 | T1 | T0 | — — | — — |
|---|---|---|---|---|---|---|---|---|---|---|---|---|---|---|---|
| INSTR.-REG | TCRL | TCRL | F | F | ADD | ADD | — — | — — | MVI | BPT | BPT * | BPT | MV | — — | — — |

CPB (11)

$\overline{CPB}$

CP-OP

EXH (10)

RESPECTIVE NO. OF CYCLES

WAIT CYCLE

CONTINUE WITH NSI

(MV)

## FIG.4

(TABLE 1)

EP 0 335 990 B1

FIG. 5

(TABLE 2)

EP 0 335 990 B1